# EUROPEAN PATENT APPLICATION

(11) **EP 2 478 817 A1**
(43) Date of publication of application: **25.07.2012**
(21) Application number: 11425017.8
(22) Date of filing: 25.01.2011
(51) Int. Cl.: A47L 15/42, A47L 15/00

(54) **Dishwasher with device for recycling the rinse water**

(71) Applicant: Bonferraro S.p.A., 37060 Bonferraro (VR) (IT)
(72) Inventor: Ambrosi, Andrea, 37052 Casaleone VR (IT)
(74) Representative: Concone, Emanuele

(57) **Abstract**

A dishwasher comprises a wash tank with a collecting sump at the bottom and a wash pump (1) that draws the water from said collecting sump and sends it into a storage reservoir (3) provided with an inlet passage (4) separate from an outlet passage (5), each passage (4, 5) being controlled by a respective valve (6, 7), as well as with a load duct (8) extending from the inlet passage (4) to the top of the storage reservoir (3). In this way, the rinse water recycling function can be performed in successive steps by loading the water multiple times in the storage reservoir (3) without this causing the outflow of the water already present therein, and it is thus possible to exploit also the water of the intermediate steps of the cycle to accumulate in the storage reservoir (3) a greater amount of water to be used for a longer and more accurate pre-wash without increasing the overall water consumption.

## Description

The present invention relates to dishwashers, and in particular to a dishwasher provided with a device for recycling the rinse water and/or the wash water.

It is known that in a dishwasher the operating cycle substantially consists of the pre-wash, wash, intermediate rinse, final rinse and drying phases. The initial pre-wash phase is useful to remove the largest residues from the dishes and the water used in said phase is then drained and replaced with clean water for the subsequent wash phase.

In order to reduce the amount of water used in the operating cycle of a dishwasher it is already known to recycle the water of the last rinse of the previous cycle for the pre-wash phase of the following cycle. This recycling is achieved by storing the rinse water in a specific reservoir that is connected to the collecting sump of the wash tank through a relevant hydraulic system with pipes and valves, such that the water can be introduced in the reservoir after the final rinse phase and returned to the tank at the beginning of the following cycle.

Examples of dishwashers provided with such a rinse water recycling system are found in US 2007-0277854A1 and DE 4243605A1, that disclose hydraulic connecting systems between the storage reservoir and the wash tank in which there is provided a specific valve that closes and opens the access to the reservoir or a two-way valve that directs the rinse water towards the reservoir or towards the drain pipe.

In both types of prior art dishwashers there is in any case provided a single valved passage for the inflow and outflow of the recycled water into and from the storage reservoir. This obviously implies that the water can be loaded in the reservoir only once per cycle, because if the valved passage is re-opened for a further loading the water previously loaded into the reservoir flows out towards the wash tank.

As a consequence, the maximum amount of water that can be loaded in the storage reservoir is equal to the amount present in the wash tank at the end of the last rinse and that the wash pump is able to transfer to the reservoir until the water level becomes so low as to cause cavitation of the pump. This also makes impossible to control precisely the amount of water loaded in the storage reservoir on the basis of the wash pump operating time since cavitation can rise not always at the same moment and to a different extent.

Moreover, the opening/closing time of the valved passage is affected by room temperature since the valve is usually of the type in which a shutter is moved due to the expansion/contraction of wax upon activating a thermoactuator. Therefore it is not even possible to precisely determine how much water flows out of the reservoir during the valve closing phase when the wash pump is already cavitating and is thus stopped.

It should be noted that if one wished to perform a second loading of recycled water in the storage reservoir it would also be possible to have first all the water from the first loading flow out to the wash tank and then re-load all the water. However, such a procedure not only implies an increase in the operating time of the wash pump and in the cycle length, but also makes yet more uncertain the definition of the amount of water actually loaded in the reservoir.

Therefore the object of the present invention is to provide a dishwasher that performs the rinse water recycling function with a structure which overcomes the above-mentioned drawbacks. This object is achieved by means of a dishwasher provided with a storage reservoir comprising two separate valved passages for the inflow and outflow of the recycled water, as well as a load duct extending from the inlet passage to the top of the reservoir. Other advantageous features of the present dishwasher are disclosed in the dependent claims.

The main advantage of this dishwasher stems from the fact that the rinse water recycling function can be performed in successive steps, i.e. loading water multiple times in the storage reservoir without this causing the outflow of the water already present therein. In this way, it is possible to exploit also the water of the intermediate steps of the cycle to accumulate in the storage reservoir a greater amount of water to be used for a longer and more accurate pre-wash without increasing the overall water consumption.

A further advantage of the present dishwasher is the higher precision in the amount of recycled water, in that the loading through a specific duct extending to the top of the reservoir greatly reduces the uncertainty on the amount of loaded water since, regardless of the time required for the closure of the inlet valve, only the water contained in said load duct can flow back to the wash pump.

These and other advantages and characteristics of the dishwasher according to the present invention will be clear to those skilled in the art from the following detailed description of an embodiment thereof, with reference to the annexed drawings wherein:

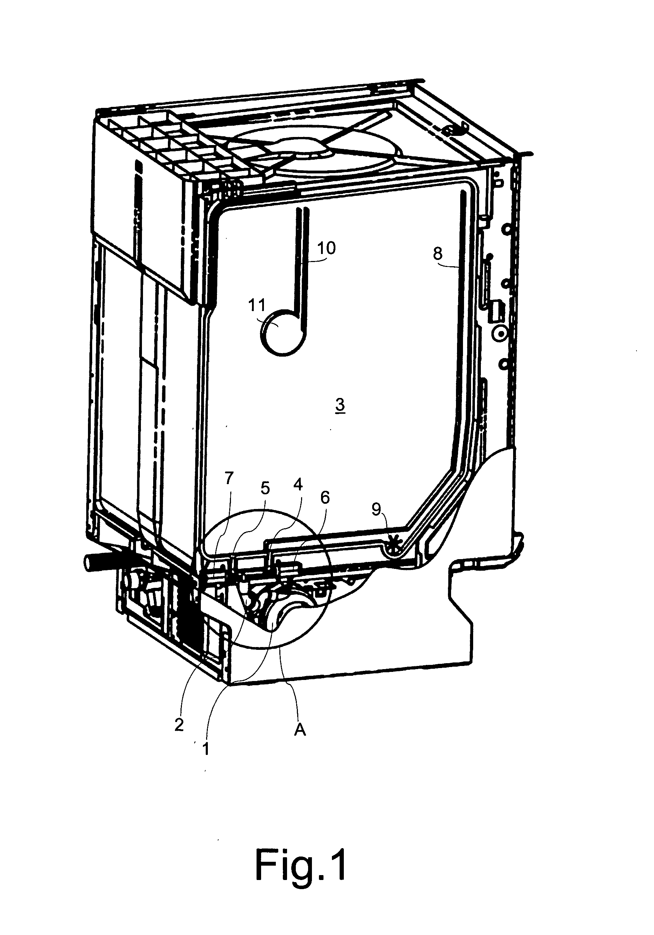

Fig.1 is a diagrammatic rear perspective view of the dishwasher, without the external casing, illustrating the position, shape and extension of the reservoir formed in the dishwasher side and its connection to the wash pump; and

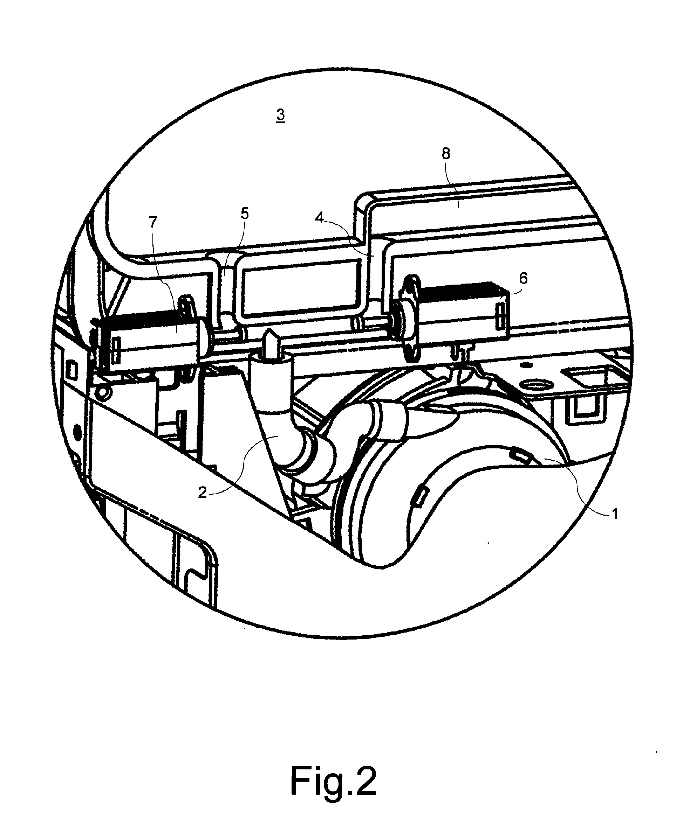

Fig.2 is an enlarged view of detail A of Fig.1.

Referring to said figures, there is seen that a dishwasher according to the present invention is conventionally provided with a wash pump 1 that draws the water from the collecting sump and sends it, through a pipe 2, towards a storage reservoir 3 extending in the side portion of the dishwasher, between the wash tank and the external casing. Said reservoir 3 is provided with valve means suitable to prevent the water loaded therein from flowing back towards the wash tank.

A first novel aspect of the present invention resides in the fact that the reservoir 3 includes an inlet passage 4 separate from an outlet passage 5, each passage being controlled by a respective valve 6 and 7, which converge downwards into the single connection to pipe 2.

A second novel aspect of the present dishwasher resides in the fact that reservoir 3 further includes a load duct 8 extending from the inlet passage 4 to the top of reservoir 3. A flowmeter, e.g. in the form of a turbine 9, is preferably arranged in the load duct 8 to precisely measure the amount of water loaded in reservoir 3 and consequently control the stopping of the wash pump 1.

It should be noted that, upon entry of the water, the air present in reservoir 3 is vented through the vent duct 10 connected to the wash tank through collar 11.

The simple and effective operation of the present dishwasher is therefore readily understood in the light of the description given above.

It is assumed that one wishes to load into reservoir 3 one liter of water used in the intermediate wash step and three liters of water used in the final rinse step, three liters being the maximum loadable amount before pump 1 starts cavitating, so as to obtain a total load of four liters corresponding to the full water load to be used in the first step of the following cycle without thus having to use network water.

The first liter of water is therefore loaded at the end of the first wash step, when the wash pump 1 is kept running and simultaneously the thermoactuator of the inlet valve 6 is activated, whereas the outlet valve 7 remains closed. As the inlet valve 6 opens up, the water flow is guided to the load duct 8, rotating turbine 9 that measures the amount thereof, and reaches the top of reservoir 3.

As soon as turbine 9 has measured one liter of water, the wash pump 1 is turned off together with the thermoactuator of the inlet valve 6 that thus closes down, while the water remaining in the wash tank is drained from the dishwasher by the drain pump (not shown). As previously mentioned, even if valve 6 takes a time longer than calculated to close down after its thermoactuator is deactivated because it operates at a temperature higher than foreseen which lengthens the wax solidification time, only the water present in the load duct 8 can flow back towards the wash pump 1.

Knowing the capacity of the load duct 8, this can be taken into account when programming the amount of water to be measured by turbine 9 before the deactivation thus being able to obtain the loading of a first precise amount of water.

At the end of the wash cycle, after the final rinse, the further three liters of water are loaded into reservoir 3 always opening the inlet valve 6 and keeping the outlet valve 7 closed, whereby the first liter of the intermediate load adds up precisely to the three liters of the final load. The water still remaining in the wash tank is then obviously drained by the drain pump and the cycle terminates.

At the beginning of the following cycle, the outlet valve 7 is opened so that the entire water load contained in reservoir 3 is transferred by gravity to the wash tank passing through pipe 2 and wash pump 1. The outlet valve 7 is then deactivated and, upon its complete closure, the wash pump 1 is activated to proceed with the cycle.

It is clear that the above-described and illustrated embodiment of the dishwasher according to the invention is just an example susceptible of various modifications. In particular, the exact structure and relative position of valves 6, 7 can change somewhat according to specific manufacturing needs, as well as the shape and position of the load duct 8 as long as it extends from the inlet passage 4 to the top of reservoir 3.

Also the flowmeter, that can be of a different type other than turbine 9, can be positioned differently, e.g. at the end of the load duct 8, to achieve an even greater precision in measurement. Similarly, the exact shape and arrangement of reservoir 3 can change according to the required capacity thereof and to the room available between the tank and the external casing, and it could extend also on multiple sides of the tank.

Moreover, for manufacturing economy, the two valves 6 and 7 could share a same control simply by differentiating the actuating times of the relevant thermoactuators driving them. In other words, the thermoactuator of the inlet valve 6 will have to be very quick, whereas that of the outlet valve 7 will have to be slower with respect thereto in order to prevent the outlet valve 7 from opening during the water loading steps.

## Claims

1. Dishwasher comprising a wash tank with a collecting sump at the bottom and a wash pump (1) that draws the water from said collecting sump and sends it through a pipe (2) into a storage reservoir (3) provided with valve means suitable to prevent the water from flowing back to said wash tank, **characterized in that** said storage reservoir (3) includes an inlet passage (4) separate from an outlet passage (5), each passage (4, 5) being controlled by a respective valve (6, 7), as well as a load duct (8) extending from said inlet passage (4) to the top of the storage reservoir (3).

2. Dishwasher according to claim 1, **characterized in that** it further includes a flowmeter suitable to measure the amount of water loaded into the storage reservoir (3), said flowmeter being preferably arranged in the load duct (8).

3. Dishwasher according to claim 2, **characterized in that** the flowmeter is made in the form of a turbine (9).

4. Dishwasher according to any of the preceding claims, **characterized in that** the two inlet (6) and outlet (7) valves share a same control, a thermoactuator of the outlet valve (7) being much slower than that of the inlet valve (6) such that the outlet valve (7) does not reach opening during the water loading steps.
